# EUROPEAN PATENT SPECIFICATION

(11) **EP 1 898 558 B1**
(45) Date of publication and mention of the grant of the patent: **05.11.2008**
(21) Application number: 06291435.3
(22) Date of filing: 08.09.2006
(51) Int. Cl.: H04L 12/28

(54) **Method of selecting a transfer zone area of a transfer zone of a discontinuous coverage radio netwerk**
Verfahren zur Auswahl eines Bereichs einer Transferzone in einem Funknetz ohne kontinuierliche Abdeckung
Procédé de sélection d'une région d' une zone de transfert dans un réseau radio sans couverture continue

(43) Date of publication of application: 12.03.2008
(73) Proprietor: Alcatel Lucent, 75008 Paris (FR)
(72) Inventor: Alberi-Morel, Marie Line, 94230 Cachan (FR); Capdevielle, Veronique, 78114 Magny les Hameaux (FR); Watts, Gregory, 91120 Paliseau (FR)
(74) Representative: Schmidt, Werner Karl

(56) References cited:
- EP-A- 1 549 096
- EP-A- 1 624 712
- WO-A-20/05020602
- GB-A- 2 387 074
- GOODMAN D J ET AL: "INFOSTATIONS: a new system model for data and messaging services" VEHICULAR TECHNOLOGY CONFERENCE, 1997, IEEE 47TH PHOENIX, AZ, USA 4-7 MAY 1997, NEW YORK, NY, USA,IEEE, US, vol. 2, 4 May 1997 (1997-05-04), pages 969-973, XP010228987 ISBN: 0-7803-3659-3

## Description

### Field of the invention

The invention relates to a method of selecting a transfer zone area of a transfer zone of a discontinuous coverage radio network for the provision of data to a mobile station passing through the transfer zone. In other aspects the invention relates to a discontinuous coverage radio network, to a network component of the discontinuous coverage radio network and to a computer program product that is adapted to perform basic steps of the method in accordance with the invention.

### Background and related art

Discontinuous coverage networks are radio access networks that do not provide a continuous radio coverage. Discontinuous coverage networks are also denoted as discontinuous coverage access networks or as discontinuous coverage radio networks. Such networks are also referred to as fourth generation access networks. According to the working principle of discontinuous coverage radio networks, transmission of data from a specific network equipment via a radio access point (RAP) to mobile stations or mobile terminals generally occurs only in high rate data transfer areas which benefit from good conditions for radio based data transfer. The specific network equipment is also referred to in the following as network component and such high rate data transfer areas are hereinafter referred to as 'transfer zones'.

In the regions between the transfer zones of a discontinuous coverage network are regions where no data exchange between the network and mobile terminals located in these regions is possible. The corresponding regions or zones are called 'no transmission zones'. Some additional data transfer may occur in so called 'intermediate zones' located between individual transfer zones by way of especially established transmissions if required to guarantee a particular quality of service (QoS), i.e., avoid service breaks and provide fast service start. An intermediate zone is usually split into two areas, a medium data rate area and a low data rate area. Hereinafter, said no transmission zones and said intermediate zones are referred to as 'no transfer zones' in order to distinguish them from the above defined high data rate transfer zones.

A discontinuous coverage network is generally made up of a number of radio access points, a respective transfer zone around each radio access point, and a no transfer zone separating a given radio access point, i.e. the corresponding transfer zone from other radio access points in the network. Thus, the individual transfer zones of the discontinuous network can be referred to as 'disconnected transfer zones'.

In order to avoid a service break in the no transfer zone between two transfer zones of the network, data are transferred to a mobile station and stored in a cache memory of the mobile station while the mobile station is crossing through a transfer zone. The cached data is then used in the no transmission or intermediate zones to make an application running on the mobile station operate seamlessly. Thus, service breaks in the no transfer zones are mainly avoided owing to cache memories and corresponding caching mechanisms located in the network component.

The document EP 1 549 096 describes a telecommunication method for a telecommunication network which provides discontinuous coverage. The telecommunication network has a plurality of disconnected cells. A method is disclosed which comprises providing a data stream to a mobile station within the coverage of a first one of the plurality of cells. The data stream is interrupted when the mobile station is moved outside the coverage. Further a second one of the plurality of cells to be the target cell of the mobile station is predicted and the data stream is provided to a server assigned to the second cell. The data stream is resumed to the mobile station when the mobile station is within the coverage of the second cell.

The document EP 1 624 712 describes a method for improving mobility in discontinuous coverage networks, an access controller and a corresponding radio access point. The method disclosed in EP 1 624 712 provides services from a content server to a terminal belonging to a discontinuous coverage network, wherein the terminal moves from a first radio coverage zone to a second radio coverage zone over a zone of non radio coverage. The discontinuous network architecture comprises access controllers and radio access points, wherein each pair of radio access controllers and radio access points defines a radio coverage zone. The method comprises the step of sending in advance from a first access controller data in a cache memory of at least one radio access point of the second radio coverage zone, when the terminal is outside of the second radio coverage zone.

The document by D. Goodman et al with the title: 'Infostations: A new system model for data and messaging services' published in vehicular technology conference, 1997, IEEE 47th Phoenix, Arizona, USA 427 May 1997; pages 969-973; XP010228987 provides an analyzation of a wireless system concept called infostations, that can provide isolated so-called pockets of high bandwidth connectivity for future data and messaging services. The intermittent connectivity available to mobile terminals using a network of infostations raises new issues in protocol design at several layers. The cited document describes the challenges of infostation protocol design and presents a mathematical analysis of infostation transfer focusing on the optimum combination of transmission rate and coverage area.

The data transfer rate between the network and the mobile station is limited. Hence, the sizes of the transfer zones of the discontinuous coverage network must be sufficiently large so that there is sufficient time to provide data to the mobile station while the (user of the) mobile station is passing through the transfer zone in order to provide a very low probability of service breaks with this discontinuously service delivery method, i.e. guarantee a given Quality of Service QoS. Further, the caches of mobile terminals leaving a given transfer zone should be filled with data to maximum extent as data is only transferred to the mobile station within the transfer zones.

### Summary of the invention

It is therefore an object of the invention to provide an improved method of selecting a transfer zone area of a transfer zone of a discontinuous coverage radio network for the provision of data to a mobile station passing through the transfer zone. The transfer zone covers at least a first transfer zone area and a second transfer zone area, wherein the second transfer zone area fully comprises the first transfer zone area, wherein the transfer zone provides a first mean data rate for the mobile station in the first transfer zone area and wherein the transfer zone provides a second mean data rate for the mobile station in the second transfer zone area. The method in accordance with the invention comprises the step of determining a first crossing time and a second crossing time of the mobile station, wherein the first crossing time reflects the time required by the mobile station to cross the first transfer zone area, and wherein the second crossing time reflects the time required by the mobile station to cross the second transfer zone area. The method further comprises the step of determining a first ratio between a first product and a second product, wherein the first product is given by the first mean data rate times the first crossing time times the size of the second transfer zone area, wherein the second product is given by the second mean data rate times the second crossing time times the size of the first transfer zone area. The method further comprises providing the data to the mobile station in the first transfer zone area if the first ratio is larger than one or equal to one or providing the data to the mobile station in the second transfer zone area if the first ratio is smaller than one.

The transfer zone in which the mobile station is served can therefore vary in size as the mobile station is either served in the first transfer zone area or in the second transfer zone area. The first transfer zone area can thereby correspond to the transfer zone area in which the highest possible data rate is possible. The second transfer zone fully comprises the first transfer zone. The second transfer zone is therefore an extension of the first transfer zone in which on average the second mean data rate is provided to the mobile station, whereby the second mean data rate is lower that the first mean data rate.

The first crossing time relates to the time span that is required for the mobile station or more precisely for the user of the mobile station to pass through the first transfer zone area. Accordingly, the second crossing time relates to the time span that is required for the user of the mobile station to pass through the second transfer zone area. The crossing times are for example determined by use of a mobility model. This will be outlined in more detail below.

The mobile station is served only in the first transfer zone area if the first ratio is larger or equal to one. If the first ratio is smaller than one, then the mobile station is served while passing through the second transfer zone area. Thus, the decision in which transfer zone area the mobile station is served is made based on parameters which reflect properties of the transfer zone (the sizes of the two transfer zone areas) and which reflect properties of the mobile station (the first and second crossing times). This ensures for each mobile station served by a transfer zone that the most appropriate transfer zone size is selected in order to serve the mobile station appropriately.

In accordance with an embodiment of the invention, the transfer zone can further cover a third transfer zone area, wherein the third transfer zone fully comprises the first and second transfer zone areas, wherein the transfer zone provides a third mean data rate for the provision of data to the mobile station in the third transfer zone area, and wherein the method comprises the step of determining a third crossing time of the mobile station, wherein the third cross time reflects the time required by the mobile station to cross the third transfer zone area. The method further comprises the step of determining a second ratio between the first and second product if the first ratio is smaller than one, wherein the parameters relating to the second transfer zone area are replacing in the formulas of the first and second products the parameters relating to the first transfer zone area, and wherein the parameters relating to the third transfer zone area are replacing the parameters in the formulas of the first and second product relating to the second transfer zone area. The parameters refer to the mean data rates, to the crossing times and to the sizes of the transfer zone areas. The method further comprises providing the data to the mobile station in the third transfer zone area if the second ratio is smaller than one.

The transfer zone can therefore optionally cover a third transfer zone area which comprises both, the first and the second transfer zone areas. The third transfer zone area is therefore larger than the second transfer zone area and the first transfer zone area. A third mean data rate is provided in the third transfer zone area and the mobile station spends the third crossing time in the third transfer zone area. As the third transfer zone area is larger than the first and second transfer zone areas, the third crossing time will be larger than the first and second crossing times. Furthermore the third mean data rate will be lower than the first and second data rates. If the first ratio is smaller than one, then the first transfer zone area is not the optimal area for provision of data to the mobile station. The criterion based on the second ratio as given above can then be used in order to decide if data should be provided when the mobile station is passing through the second or third transfer zone area. If the first ratio is larger or equal than one, then the mobile station will be served while passing through the first transfer zone area. In this case, there is no need to determine the second ratio.

In accordance with an embodiment of the invention, the method further comprises repeating the steps carried out with respect to the third transfer zone area for at least one more transfer zone area if the first ratio is smaller than one, wherein the transfer zone being adaptable to cover the at least one more transfer zone area, wherein the at least one more transfer zone area fully comprises the first, second and third transfer zones, and wherein data are provided to the mobile station in the at least one more transfer zone if the at least one more transfer zone is determined to be the most adequate transfer zone size for providing data to the mobile station on the basis of the given criterion for the second ratio.

The method in accordance with the invention can therefore be generalized in order to select the transfer zone area of a plurality of transfer zone areas of a transfer zone for which the above mentioned second ratio is always larger than one or equal to one with respect to all other transfer zone areas. The mobile station can then be served during the corresponding transfer zone area while passing through the transfer zone. The method in accordance with the invention is particularly advantageous as the size of the transfer zone can be simply calibrated to a nearly optimal size by use of the above given first and second ratios. As mentioned in the introductory part, the radio resource usage of the discontinuous coverage radio network is optimized when the transmission of data occurs when the radio conditions are good. The above mentioned first and second ratios provide a criteria in order to decide on the proper size of the transfer zone area. Thus the choice of the optimal size of a transfer zone for a mobile station by determining the optimal transfer zone area from a plurality of transfer zone areas contributes to an optimal utilization of the network resources and thus to an improved network performance.

In accordance with an embodiment of the invention, the mobile station is initially served by the transfer zone only when passing through the first transfer zone area. When, e.g., no information about the first, second, and third crossing times of the mobile station is available to the communications network, or more particularly to a network component associated with the transfer zone, the mobile station is served by the transfer zone only when the mobile station is located within the first transfer zone area. This ensures that the mobile station is served in the transfer zone area that provides the highest data rate.

In accordance with an embodiment of the invention, the first, second and third crossing times are determined for the mobile station by use of a mobility model. The mobility model can be applied to each mobile station independently. The behavior of the user of the mobile station can for example be tracked. The user might for example travel each morning on a specific route from his home to his working place and each afternoon on the same route in backwards direction. He might thereby pass trough several transfer zones, wherein each transfer zone provides the ability to serve the user within different transfer zone areas as proposed by the method in accordance with the invention. The crossing times of the user through each transfer zone along the route can be tracked and the first, second, and third crossing times can be determined for each transfer zone by taking the average of the corresponding tracked crossing times that have been measured over, e.g., the time span of a month. The usage of a mobility model provides the advantage that the corresponding crossing times can be determined very accurately for each user. Hence, the most appropriate transfer zone area of a transfer zone can be employed for the provision of data to the user's mobile station while the user is passing through the transfer zone. This ensures that sufficient data can be provided to the user so that he is able to pass through a no transfer zone with smaller risk of a service break.

A mobility model is also described in the European Patent Application EP 1 549 096. This mobility model is based on the detection of a movement pattern of each mobile station. It assumes that users of mobile stations have a certain repetitive behavior. They pass, e.g., each morning through the same transfer zones when the users are on the way from home to work. By collecting information about the behavior of each user, the corresponding crossing times can be determined.

Alternatively, the crossing times could be determined by using statistics values that are obtained from monitoring the behavior of a large plurality of mobile stations. For example, assuming that most users of mobile stations behave similarly, mean crossing times can be derived for a plurality of mobile stations which can then be used as first, second or third crossing times for a large plurality of mobile stations. The advantage of using statistics values is that there is no need to track each user independently. This reduces the amount of network resources required to obtain the mean crossing times in comparison to the embodiment where a mobility model is applied to each mobile station.

In accordance with an embodiment of the invention, the first, second and third mean data rates are determined for the mobile station by using statistics values that are obtained from monitoring the behavior of a large plurality of mobile stations. Assuming that most users of mobile stations behave similarly, the first, second and third mean data rates can be assessed in dividing the total amount of data transferred to the mobile station when the mobile station is passing through the first, second or third transfer zone area by the first, second or third crossing times.

In another aspect, there is provided a discontinuous coverage radio network comprising a transfer zone, wherein the transfer zone covers at least a first transfer zone area or a second transfer zone area, wherein the second transfer zone area fully comprises the first transfer zone area, wherein the transfer zone provides a first mean data rate for a mobile station in the first transfer zone area, and wherein the transfer zone provides a second mean data rate for a mobile station in the second transfer zone area. The discontinuous coverage radio network further comprises means for determining a first crossing time and a second crossing time of the mobile station, wherein the first crossing time reflects the time required by the mobile station to cross the first transfer zone area, and wherein the second crossing time reflects the time required by the mobile station to cross the second transfer zone area. The discontinuous coverage radio network further comprises means for determining a first ratio between a first product and a second product, wherein the first product is given by the first mean data rate times the first crossing time times the size of the size of the second transfer zone area, wherein the second product is given by the second mean data rate times the second crossing time times the size of the first transfer zone area. Further it comprises means for providing the data to the mobile station in the first transfer zone area and means to provide the data to the mobile station in the second transfer zone area.

In a further aspect, there is provided a network component of a discontinuous radio network, wherein the network component is associated with the transfer zone of a discontinuous coverage radio network, wherein the transfer zone covers at least a first transfer zone area and a second transfer zone area, wherein the second transfer zone area fully comprises the first transfer zone area, wherein the transfer zone provides a first mean data rate for a mobile station in the first transfer zone area, and wherein the transfer zone provides a second mean data rate for the mobile station in the second transfer zone area. The component comprises means for determining a first crossing time and a second crossing time of a mobile station, wherein the first crossing time reflects the time required by the mobile station to cross the first transfer zone area, wherein the second crossing time reflects the time required by the mobile station to cross the second transfer zone area. The component further comprises means for determining a first ratio between a first product and the second product, wherein the first product is given by the first mean data rate times the first crossing time times the size of the second transfer zone area, wherein the second product is given by the second mean data rate times the second crossing time times the size of the first transfer zone area. Further the component provides means for providing the data to the mobile station in the first transfer zone area if the first ratio is larger than or equal to one and means for providing the data to the mobile station in the second transfer zone area if the first ratio is smaller than one.

In accordance with an embodiment of the invention, the network component is associated with a plurality of disconnected transfer zones of the discontinuous coverage radio network, wherein each of the disconnected transfer zones of the plurality of disconnected transfer zones is adaptable to cover at least the first transfer zone area and the second transfer zone area.

In accordance with an embodiment of the invention, the network component corresponds to an access controller or to a gateway.

In another aspect, there is provided a computer program product for selecting a transfer zone area of a transfer zone of a discontinuous coverage network for the provision of data to a mobile station passing through the transfer zone, wherein the transfer zone is adaptable to cover at least a first transfer zone area and a second transfer zone area, wherein the second transfer zone area fully comprises the first transfer zone area, wherein the transfer zone provides a first mean data rate for the mobile station in the first transfer zone area, wherein the transfer zone provides a second mean data rate for the mobile station in the second transfer zone area, wherein the computer program product comprises computer executable instructions, wherein the instructions are adapted to performing the steps of determining a first crossing time and a second crossing time of the mobile station, wherein the first crossing time reflects the time required by the mobile station to cross the first transfer zone area, wherein the second crossing time reflects the time required by the mobile station to cross the second transfer zone area. The instructions are further adapted to perform the step of determining a first ratio between a first product and a second product, wherein the first product is given by the first mean data rate times the first crossing time times the size of the second transfer zone area, wherein the second product is given by the second mean data rate times the second crossing time times the size of the first transfer zone area. Further the step of providing the data to the mobile station in the first transfer zone is carried out if the first ratio is larger than or equal to one. Alternatively, the step of providing the data to the mobile station in the second transfer zone area is carried out if the first ratio is smaller than one.

### Brief description of the drawings

In the following various embodiments of the invention will be described in greater detail by making reference to the drawings in which:
- Figure 1: shows a block diagram of a discontinuous coverage radio network, and
- Figure 2: shows a flow diagram illustrating basic steps performed by the method in accordance with the invention.

### Detailed description

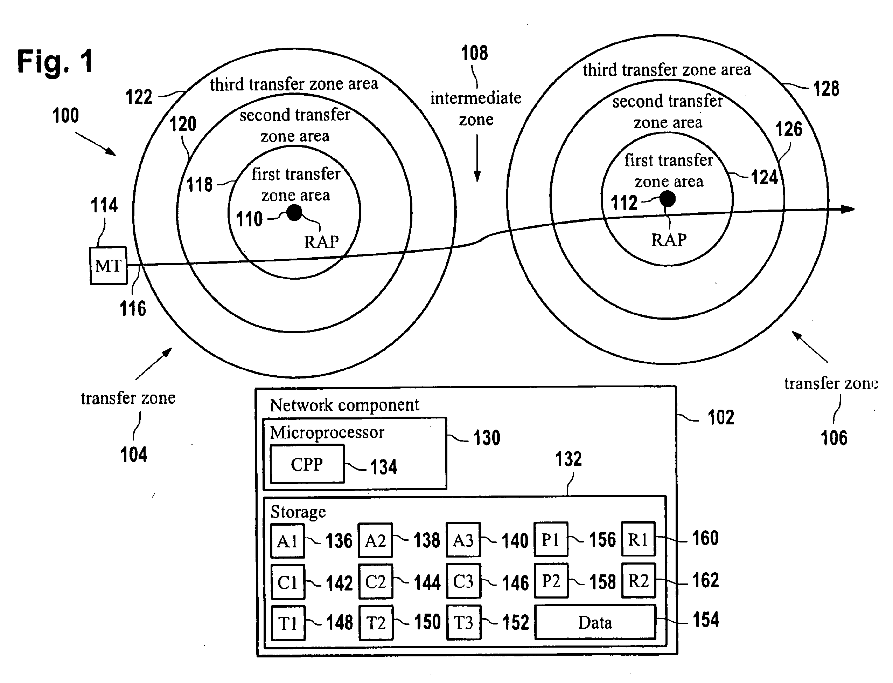

Fig. 1 shows a block diagram of a discontinuous coverage radio network 100. The discontinuous coverage radio network 100 comprises a network component 102 and radio access points (RAP) 110 and 112. The network component 102 is associated with the radio access points 110 and 112. Each radio access point 110 or 112 serves transfer zones 104 or 106, respectively. The transfer zone 104 and the transfer zone 106 are separated from each other as an intermediate zone 108 is located in between the two transfer zones. The network component 102 comprises a microprocessor 130 and a storage device 132. The microprocessor 130 executes a computer program product 134. The computer program product 134 is stored permanently on the storage device 132 and loaded into the microprocessor 130 for example after the startup of the network component 102.

The transfer zone 104 covers a first transfer zone area 118 with a size 136, a second transfer zone area 120 with a size 138 and a third transfer zone area 122 with a size 140. The second transfer zone area 120 comprises the first transfer zone area 118. The second transfer zone area 120 therefore refers to the full area that is enclosed by the circle bordering the outside of the second transfer zone area 120. Similarly, the third transfer zone area 122 comprises the second transfer zone 120 and the first transfer zone area 118. The third transfer zone area 122 therefore relates to the total area around the RAP 110 enclosed by the circle bordering the outside of the third transfer zone area 122.

The sizes of the transfer zone 136, 138, and 140 are, e.g., provided by the administrator of the network 100 and stored on the storage device 132 so that they are available to the computer program product 134.

A mobile terminal or station 114 traveling along path 116 through the network 100 is served by the radio access point 110 when passing through the transfer zone 104. When the mobile station 114 travels through the transfer zone 104, the mobile station 114 spends the first crossing time 148 in order to pass the first transfer zone area 118, the second crossing time 150 in order to pass the second transfer zone area 120, and the third crossing time 152 in order to pass through the third transfer zone area 122. The crossing times 148, 150 and 152 are determined by the computer program product 134 for example by use of a mobility model. The first crossing time 148, the second crossing time 150, and the third crossing time 152 are further stored on the storage device 132.

Further, the mean data rate provided to the mobile station 114 by the first transfer zone 104 corresponds to a first data rate 142, when the mobile station 114 is served only when passing through the first transfer zone area 118. A second mean data rate 144 is provided for the provision of data 154, when the mobile station 114 is served while passing through the second transfer zone area 120. Further a third mean data rate 146 is provided when the mobile station is served while passing through the third transfer zone area 122. The first, second and third mean data rates 142, 144, 146 are, e.g., also provided by the administrator of the network 100 or derived from statistics values and stored on the storage device 132 so that they are available to the computer program product 134.

When the mobile station 114 enters the transfer zone 104 while traveling along path 116, the computer program product 134 takes notice of the entrance of the mobile station 114 into the transfer zone 104. A first ratio 160 between a first product 156 and a second product 158 is then determined by the computer program product 134. The first product 156 (P1) is given by the first mean data rate 142 (C1) times the first crossing time (T1) 148 times the magnitude (size) of the second transfer zone area 138 (A2): P1 = C1 X T1 X A2.

The second product 158 (P2) is given by the second mean data rate (C1) 144 times the second crossing time (T2) 150 times the size of the first transfer zone area (A1) 136: P2 = C2 X T2 X A1.

The first product 156 is then divided by the second product 158 which yields a first ratio 160 (R1): R1 = P1/P2.

If the first ratio is larger than one or if this first ratio is equal to one, then data 154 is provided to the mobile station 114 only while the mobile station is passing through the first transfer zone area 118. If the first ratio 160 is smaller than one, then it is further determined if the second transfer zone area 120 or the third transfer zone area 122 is the most appropriate area for serving the mobile station while it is passing through transfer zone 104.

A second ratio (R2) 162 between the first and second product is therefore determined, wherein the parameters relating to the third transfer zone area 122 in the above mentioned formulas of the first and second products 156 and 158 replace the parameters that relate to the second transfer zone 120 and the parameters relating to the second transfer 120 in the above mentioned formulas of the first and second products 156 and 158 replace the parameters that relate to the first transfer zone 118.

The data 154 is then provided to the mobile station while passing through the third transfer zone area 122 if the second ratio 162 is smaller than one. If the second ration 162 equals one or if the second ratio 162 is larger than one, then data 154 is provided to the mobile station 114 while it is passing through the second transfer zone area 120.

Similarly, the transfer zone 106 can provide the provision of data within a first transfer zone area 124, a second transfer zone area 126, and a third transfer zone area 128 while the third transfer zone area 128 fully includes the second transfer zone area 126 and the first transfer zone area 124 and while the second transfer zone area 126 fully comprises the first transfer zone area 124. The network component 102 can also determine the corresponding crossing times and mean data rates for the various transfer zone areas, and then determine the appropriate transfer zone area from the first transfer zone area 124, from the second transfer zone area 126 or from the third transfer zone area 128 in the same way as described for the transfer zone 104.

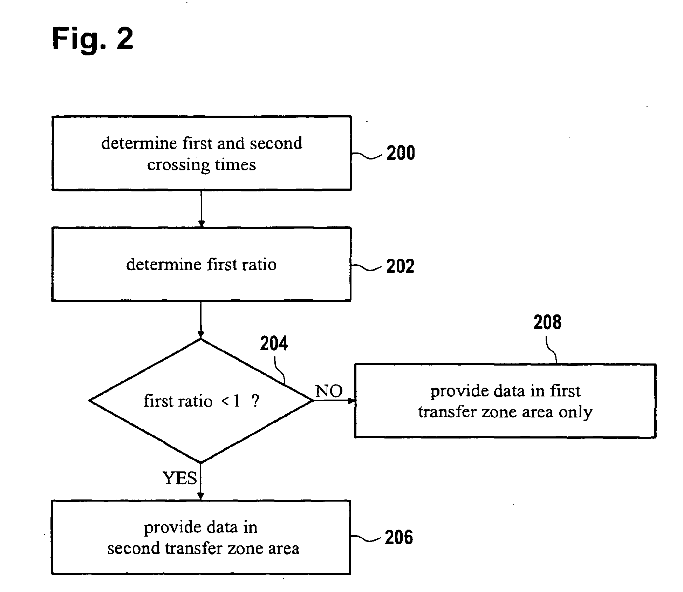

Fig. 2 shows a flow diagram illustrating the basic steps performed by the method in accordance with the invention. In step 200 first and second crossing times of a mobile station are determined, wherein the first crossing time reflects the period of time that is spent by the mobile station in a first transfer zone area, wherein the second crossing time reflects the time that is required by the mobile station to cross a second transfer zone area, wherein the first and second transfer zone areas are covered by a transfer zone of a discontinuous coverage network, wherein the first transfer zone area is fully comprised in the second transfer zone area. In step 202 a first ratio between a first product and a second product is determined, wherein the first product is given by a first mean data rate times the first crossing time times the size of the second transfer zone area, wherein the second product is given by a second mean data rate times the second crossing time times the size of the first transfer zone area. The first mean data rate corresponds to the average data rate that is provided to the mobile station while passing through the first transfer zone area and the second mean data rate corresponds to the average data rate provided to the mobile station while passing through the second transfer zone area. In step 204 it is determined if the first ratio is smaller than one. If this is not the case, then the method in accordance with the invention proceeds with step 208 in which data is provided to the mobile station while passing through the first transfer zone area. If in step 204 the first ratio has been determined to be less than one, then the method in accordance with the invention proceeds with step 206, wherein the data is provided to the mobile station while it is passing through the second transfer zone area.

### List of Reference Numerals

| | |
|---|---|
| 100 | Discontinuous coverage radio network |
| 102 | Network component |
| 104 | Transfer zone |
| 106 | Transfer zone |
| 108 | Intermediate zone |
| 110 | Radio access point |
| 112 | Radio access point |
| 114 | Mobile station |
| 116 | Path |
| 118 | First transfer zone area |
| 120 | Second transfer zone area |
| 122 | Third transfer zone area |
| 124 | First transfer zone area |
| 126 | Second transfer zone area |
| 128 | Third transfer zone area |
| 130 | Microprocessor |
| 132 | Storage |
| 134 | Computer program product |
| 136 | Size of the first transfer zone area |
| 138 | Size of the second transfer zone area |
| 140 | Size of the third transfer zone area |
| 142 | First mean data rate |
| 144 | Second mean data rate |
| 146 | Third mean data rate |
| 148 | First crossing time |
| 150 | Second crossing time |
| 152 | Third crossing time |
| 154 | Data |
| 156 | First product |
| 158 | Second product |
| 160 | First ratio |
| 162 | Second ratio |

## Claims

1. A method of selecting a transfer zone area (118, 120) of a transfer zone (104) of a discontinuous coverage radio network (100) for the provision of data (154) to a mobile station (114) passing through said transfer zone, said method comprising:
- determining a first crossing time (148) and a second crossing time (150) of said mobile station, said first crossing time reflecting the time required by said mobile station to cross a first transfer zone area (118) of said transfer zone, said second crossing time reflecting the time required by said mobile station to cross a second transfer zone area (120) of said transfer zone, said second transfer zone fully comprising said first transfer zone;
- determining a first ratio (160) between a first product (156) and a second product (158), said first product being given by a first mean data rate (142) times said first crossing time times the size of said second transfer zone area (138), said second product being given by a second mean data rate (144) times said second crossing time times the size of the first transfer zone area (136), wherein said first mean data rate relates to the average data rate provided by the discontinuous coverage radio network for the first transfer zone area, and wherein said second mean data rate relates to the average data rate provided by the discontinuous coverage radio network for the second transfer zone area;
- providing said data to said mobile station in said first transfer zone area if said first ratio is larger than or equal to one;
- providing said data to said mobile station in said second transfer zone area if said first ratio is smaller than one.

2. The method of claim 1, further comprising:
- determining a third crossing time (152) of said mobile station, said third crossing time reflecting the time required by said mobile station to cross a third transfer zone area (122) of said transfer zone, said third transfer zone fully comprising said first and second transfer zone areas, said discontinuous coverage radio network providing a third mean data rate (146) for the third transfer zone area;
- if said first ratio is smaller than one, determining a second ratio (162) between the first and second product, wherein the parameters relating to the third transfer zone area are replacing in the formulas of the first and second products the parameters relating to the second transfer zone area, and wherein the parameters relating to the second transfer zone area are replacing in the formulas of the first and second product the parameters relating to the first transfer zone area, whereby said parameters relating to the mean data rates, to the crossing times and to the sizes of transfer zone areas;
- providing said data (154) to said mobile station in said third transfer if said second ratio is smaller than one.

3. The method of claim 2, wherein if the first ratio is smaller than one, the steps carried out with respect to the third transfer zone area are carried out for at least one more transfer zone area, wherein the at least one more transfer zone area fully comprises said first, second and third transfer zone areas, and wherein said data is provided to said mobile station in said at least one more transfer zone area if the at least one more transfer zone area is determined on the basis of the second product to be the most adequate transfer zone area for providing data to the mobile station.

4. The method of claim 2, wherein said first, second and third crossing times (148, 150, 152) are determined for said mobile station by use of a mobile station-specific mobility model, wherein said mobility model takes duration of stays of the mobile station in transfer zones of said discontinuous coverage radio network into account.

5. A discontinuous coverage radio network (100) comprising:
- a transfer zone (104), said transfer zone covering at least a first transfer zone area (118) and a second transfer zone area (120), said second transfer zone area fully comprising said first transfer zone area, said discontinuous coverage network providing a first mean data rate (142) in said first transfer zone area and a second mean data rate (144) in said second transfer zone area;
- means for determining a first crossing time (142) and a second crossing time (144) of a mobile station, said first crossing time reflecting the time required by said mobile station to cross said first transfer zone area of said transfer zone, said second crossing time reflecting the time required by said mobile station to cross said second transfer zone;
- means for determining a first ratio (160) between a first product (156) and a second product (158), said first product being given by the first mean data rate times said first crossing time times the size of said second transfer zone area (138), said second product being given by the second mean data rate times said second crossing time times the size of the first transfer zone area (136);
- means for providing said data (154) to said mobile station in said first transfer zone area if said first ratio is larger than or equal to one;
- means for providing said data to said mobile station in said second transfer zone area if said first ratio is smaller than one.

6. A network component (102) of a discontinuous coverage radio network (100), said component comprising:
- means for determining a first crossing time (148) and a second crossing time (150) of a mobile station (114), said first crossing time reflecting the time required by said mobile station to cross a first transfer zone area (118), said second crossing time reflecting the time required by said mobile station to cross a second transfer zone area (120), said first and second transfer zone areas relating to a transfer zone (104), said first transfer zone area being fully comprised in said second transfer zone area, said component being associated with the transfer zone, said discontinuous coverage network providing a first mean data rate (142) for the provision of data (154) to the mobile station in said first transfer zone area and a second mean data rate (144) in said second transfer zone area;
- means for determining a first ratio (160) between a first product (156) and a second product (158), said first product being given by said first mean data rate times said first crossing time times the size of the second transfer zone area (138), said second product being given by said second mean data rate times said second crossing time times the size of the first transfer zone area (136);
- means for providing data to said mobile station in said first transfer zone area if said first ratio is larger than or equal to one;
- means for providing said data to said mobile station in said second transfer zone area if said first ratio is smaller than one.

7. A computer program product (134) for selecting a transfer zone area (118, 120) of a transfer zone (104) of a discontinuous coverage radio network (100) for the provision of data (154) to a mobile station (114) passing through said transfer zone, said computer program product comprising computer executable instructions, said instructions being adapted to performing the steps:
- determining a first crossing time (148) and a second crossing time (150) of said mobile station, said first crossing time reflecting the time required by said mobile station to cross a first transfer zone area (118) of said transfer zone, said second crossing time reflecting the time required by said mobile station to cross a second transfer zone area (120) of said transfer zone, said second transfer zone fully comprising said first transfer zone;
- determining a first ratio (160) between a first product (156) and a second product (158), said first product being given by a first mean data rate times said first crossing time times the size (138) of said second transfer zone area, said second product being given by a second mean data rate times said second crossing time times the size (136) of the first transfer zone area, wherein said first mean data rate relates to the average data rate provided by the discontinuous coverage radio network for the first transfer zone area, and wherein said second mean data rate relates to the average data rate provided by the discontinuous coverage radio network for the second transfer zone area;
- providing said data to said mobile station in said first transfer zone area if said first ratio is larger than or equal to one;
- providing said data to said mobile station in said second transfer zone area if said first ratio is smaller than one.

## Patentansprüche

1. Ein Verfahren zur Auswahl eines Transferzonenbereichs (118, 120) einer Transferzone (104) in einem Funknetz (100) ohne kontinuierliche Abdeckung für das Liefern von Daten (154) an eine Mobilstation (114), welche die besagte Transferzone durchquert, wobei das Verfahren umfasst:
- Bestimmen einer ersten Durchquerungszeit (148) und einer zweiten Durchquerungszeit (150) der besagten Mobilstation, wobei die besagte erste Durchquerungszeit die Zeit widerspiegelt, die von der besagten Mobilstation benötigt wird, um einen ersten Transferzonenbereich (118) der besagten Transferzone zu durchqueren, und die zweite Durchquerungszeit die Zeit widerspiegelt, die von der besagten Mobilstation benötigt wird, um einen zweiten Transferzonenbereich (120) der besagten Transferzone zu durchqueren, wobei die besagte zweite Transferzone komplett die besagte erste Transferzone umfasst;
- Bestimmen einer ersten Ratio (160) zwischen einem ersten Produkt (156) und einem zweiten Produkt (158), wobei das besagte erste Produkt das Ergebnis einer ersten durchschnittlichen Datenrate (142) mal die besagte erste Durchquerungszeit mal die Größe des besagten zweiten Transferzonenbereichs (138) ist, wobei das besagte zweite Produkt das Ergebnis einer zweiten durchschnittlichen Datenrate (144) mal die besagte zweite Durchquerungszeit mal die Größe des besagten ersten Transferzonenbereichs (136) ist, wobei sich die besagte erste durchschnittliche Datenrate auf die von dem Funknetz ohne kontinuierliche Abdeckung für den ersten Transferzonenbereich bereitgestellte durchschnittliche Datenrate bezieht, und wobei sich die besagte zweite durchschnittliche Datenrate auf die von dem Funknetz ohne kontinuierliche Abdeckung für den zweiten Transferzonenbereich bereitgestellte durchschnittliche Datenrate bezieht;
- Liefern der besagten Daten an die besagte Mobilstation in dem besagten ersten Transferzonenbereich, wenn die besagte erste Ratio größer als oder gleich eins ist;
- Liefern der besagten Daten an die besagte Mobilstation in dem besagten zweiten Transferzonenbereich, wenn die besagte erste Ratio kleiner als eins ist.

2. Das Verfahren nach Anspruch 1, weiterhin umfassend:
- Bestimmen einer dritten Purchquerungszeit (152) der besagten Mobilstation, wobei die besagte dritte Durchquerungszeit die Zeit widerspiegelt, die von der besagten Mobilstation benötigt wird, um einen dritten Transferzonenbereich (122) der besagten Transferzone zu durchqueren, wobei die besagte dritte Transferzone komplett den besagten ersten und den besagten zweiten Transferzonenbereich umfasst, wobei das besagte Funknetz ohne kontinuierliche Abdeckung eine dritte durchschnittliche Datenrate (146) für den dritten Transferzonenbereich bereitstellt;
- Wenn die besagte erste Ratio kleiner als eins ist, Bestimmen einer zweiten Ratio (162) zwischen dem ersten und dem zweiten Produkt, wobei die dem dritten Transferzonenbereich entsprechenden Parameter in den Formeln des ersten und des zweiten Produkts die Parameter, die sich auf den zweiten Transferzonenbereich beziehen, ersetzen, und wobei die dem zweiten Transferzonenbereich entsprechenden Parameter in den Formeln des ersten und des zweiten Produkts die Parameter, die sich auf den ersten Transferzonenbereich beziehen, ersetzen, wobei sich die besagten Parameter auf die durchschnittlichen Datenraten, die Durchquerungszeiten und die Größen der Transferzonenbereiche beziehen;
- Liefern der besagten Daten (154) an die besagte Mobilstation in dem besagten dritten Transferzonenbereich, wenn die besagte zweite Ratio kleiner als eins ist.

3. Das Verfahren nach Anspruch 2, wobei, wenn die erste Ratio kleiner als eins ist, die in Bezug auf den dritten Transferzonenbereich ausgeführten Schritte für mindestens einen weiteren Transferzonenbereich ausgeführt werden, wobei der mindestens eine weitere Transferzonenbereich komplett die besagten ersten, zweiten und dritten Transferzonenbereiche umfasst, und wobei die besagten Daten an die besagte Mobilstation in dem besagten mindestens einen weiteren Transferzonenbereich geliefert werden, wenn der mindestens eine weitere Transferzonenbereich auf der Basis des zweiten Produktes als der am meisten geeignete Transferzonenbereich für das Liefern von Daten an die Mobilstation bestimmt wird.

4. Das Verfahren nach Anspruch 2, wobei die besagten ersten, zweiten und dritten Durchquerungszeiten (148, 150, 152) für die besagte Mobilstation anhand eines mobilstationsspezifischen Mobilitätsmodells bestimmt werden, wobei das besagte Mobilitätsmodell die Dauer des Aufenthalts der Mobilstation in Transferzonen des besagten Funknetzes ohne kontinuierliche Abdeckung berücksichtigt.

5. Ein Funknetz ohne kontinuierliche Abdeckung (100), welches umfasst:
- Eine Transferzone (104, wobei die besagte Transferzone mindestens einen ersten Transferzonenbereich (118) und einen zweiten Transferzonenbereich (120) abdeckt, wobei der besagte zweite Transferzonenbereich komplett den besagten ersten Transferzonenbereich umfasst, wobei das besagte Funknetz ohne kontinuierliche Abdeckung eine erste durchschnittliche Datenrate (142) in dem besagten ersten Transferzonenbereich und eine zweite durchschnittliche Datenrate (144) in dem besagten zweiten Transferzonenbereich bereitstellt;
- Mittel zum Bestimmen einer ersten Durchquerungszeit (142) und einer zweiten Durchquerungszeit (144) einer Mobilstation, wobei die besagte erste Durchquerungszeit die Zeit widerspiegelt, welche die besagte Mobilstation benötigt, um den besagten ersten Transferzonenbereich der besagten Transferzone zu durchqueren, wobei die besagte zweite Durchquerungszeit die Zeit widerspiegelt, welche die besagte Mobilstation benötigt, um die besagte zweite Transferzone zu durchqueren,
- Mittel zum Bestimmen einer ersten Ratio (160) zwischen einem ersten Produkt (156) und einem zweiten Produkt (158), wobei das besagte erste Produkt das Ergebnis einer ersten durchschnittlichen Datenrate mal die besagte erste Durchquerungszeit mal die Größe des besagten zweiten Transferzonenbereichs (138) ist, wobei das zweite Produkt das Ergebnis der zweiten durchschnittlichen Datenrate mal die besagte zweite Durchquerungszeit mal die Größe des besagten ersten Transferzonenbereichs (136) ist;
- Mittel zum Liefern der besagten Daten (154) an die besagte Mobilstation in dem besagten ersten Transferzonenbereich, wenn die besagte erste Ratio größer als oder gleich eins ist;
- Mittel zum Liefern der besagten Daten an die besagte Mobilstation in dem besagten zweiten Transferzonenbereich, wenn die besagte erste Ratio kleiner als eins ist.

6. Eine Netzkomponente (102) eines Funknetzes ohne kontinuierliche Abdeckung (100), wobei die Komponente umfasst:
- Mittel zum Bestimmen einer ersten Durchquerungszeit (148) und einer zweiten Durchquerungszeit (150) einer Mobilstation (114), wobei die besagte erste Durchquerungszeit die Zeit widerspiegelt, welche die besagte Mobilstation benötigt, um einen ersten Transferzonenbereich (118) zu durchqueren, wobei die besagte zweite Durchquerungszeit die Zeit widerspiegelt, welche die besagte Mobilstation benötigt, um einen zweiten Transferzonenbereich (120) zu durchqueren, wobei sich der besagte erste und der besagte zweite Transferzonenbereich auf eine Transferzone (104) bezieht, wobei der besagte erste Transferzonenbereich komplett in dem besagten zweiten Transferzonenbereich enthalten ist, wobei die besagte Komponente der Transferzone zugeordnet ist, wobei das besagte Funknetz ohne kontinuierliche Abdeckung eine erste durchschnittliche Datenrate (142) für das Liefern von Daten (154) an die Mobilstation in dem besagten ersten Transferzonenbereich und eine zweite durchschnittliche Datenrate (144) in dem besagten zweiten Transferzonenbereich bereitstellt;
- Mittel zum Bestimmen einer ersten Ratio (160) zwischen einem ersten Produkt (156) und einem zweiten Produkt (158), wobei das besagte erste Produkt das Ergebnis der besagten ersten durchschnittlichen Datenrate mal die besagte erste Durchquerungszeit mal die Größe des besagten zweiten Transferzonenbereichs (138) ist, wobei das zweite Produkt das Ergebnis der besagten zweiten durchschnittlichen Datenrate mal die besagte zweite Durchquerungszeit mal die Größe des besagten ersten Transferzonenbereichs (136) ist;
- Mittel zum Liefern von Daten an die besagte Mobilstation in dem besagten ersten Transferzonenbereich, wenn die besagte erste Ratio größer als oder gleich eins ist;
- Mittel zum Liefern der besagten Daten an die besagte Mobilstation in dem besagten zweiten Transferzonenbereich, wenn die besagte erste Ratio kleiner als eins ist.

7. Ein Computerprogramm-Produkt (134) zum Auswählen eines Transferzonenbereichs (118, 120) einer Transferzone (104) eines Funknetzes ohne kontinuierliche Abdeckung (100) zum Liefern von Daten (154) an eine Mobilstation (114), welche die besagte Transferzone durchquert, wobei das besagte Computerprogramm-Produkt computerausführbare Befehle enthält, wobei die besagten Befehle fähig sind, folgende Schritte auszuführen:
- Bestimmen einer ersten Durchquerungszeit (148) und einer zweiten Durchquerungszeit (150) der besagten Mobilstation, wobei die besagte erste Durchquerungszeit die Zeit widerspiegelt, die von der besagten Mobilstation benötigt wird, um einen ersten Transferzonenbereich (118) der besagten Transferzone zu durchqueren, wobei die besagte zweite Durchquerungszeit die Zeit widerspiegelt, die von der besagten Mobilstation benötigt wird, um einen zweiten Transferzonenbereich (120) der besagten Transferzone zu durchqueren, wobei die besagte zweite Transferzone komplett die besagte erste Transferzone umfasst;
- Bestimmen einer ersten Ratio (160) zwischen einem ersten Produkt (156) und einem zweiten Produkt (158), wobei das besagte erste Produkt das Ergebnis einer ersten durchschnittlichen Datenrate mal die besagte erste Durchquerungszeit mal die Größe (138) des besagten zweiten Transferzonenbereichs ist, wobei das besagte zweite Produkt das Ergebnis einer zweiten durchschnittlichen Datenrate mal die besagte zweite Durchquerungszeit mal die Größe (136) des besagten ersten Transferzonenbereichs ist, wobei sich die besagte erste durchschnittliche Datenrate auf die von dem Funknetz ohne kontinuierliche Abdeckung für den ersten Transferzonenbereich bereitgestellte durchschnittliche Datenrate bezieht, und wobei sich die besagte zweite durchschnittliche Datenrate auf die von dem Funknetz ohne kontinuierliche Abdeckung für den zweiten Transferzonenbereich bereitgestellte durchschnittliche Datenrate bezieht;
- Liefern der besagten Daten an die besagte Mobilstation in dem besagten ersten Transferzonenbereich, wenn die besagte erste Ratio größer als oder gleich eins ist;
- Liefern der besagten Daten an die besagte Mobilstation in dem besagten zweiten Transferzonenbereich, wenn die besagte erste Ratio kleiner als eins ist.

## Revendications

1. Procédé de sélection d'une aire de transfert (118, 120) d'une zone de transfert (104) d'un réseau sans fil à couverture discontinue (100) afin de fournir des données (154) à une station mobile (114) qui passe par ladite zone de transfert, ledit procédé comprenant :
- la détermination d'un premier temps de traversée (148) et d'un deuxième temps de traversée (150) de ladite station mobile, ledit premier temps de traversée reflétant le temps nécessaire à ladite station mobile pour traverser une première aire de transfert (118) de ladite zone de transfert, ledit deuxième temps de traversée reflétant le temps nécessaire à ladite station mobile pour traverser une deuxième aire de transfert (120) de ladite zone de transfert, ladite deuxième aire de transfert comprenant totalement ladite première aire de transfert ;
- la détermination d'un premier rapport (160) entre un premier produit (156) et un deuxième produit (158), ledit premier produit étant donné par un premier débit moyen (142) multiplié par ledit premier temps de traversée multiplié par la taille de ladite deuxième aire de transfert (138), ledit deuxième produit étant donné par un deuxième débit moyen (144) multiplié par ledit deuxième temps de traversée multiplié par la taille de la première aire de transfert (136), dans lequel ledit premier débit moyen concerne le débit moyen fourni par le réseau sans fil à couverture discontinue pour la première aire de transfert et dans lequel ledit deuxième débit moyen concerne le débit moyen fourni par le réseau sans fil à couverture discontinue pour la deuxième aire de transfert ;
- la fourniture desdites données à ladite station mobile dans ladite première aire de transfert si ledit premier rapport est supérieur ou égal à un ;
- la fourniture desdites données à ladite station mobile dans ladite deuxième aire de transfert si ledit premier rapport est inférieur à un.

2. Procédé selon la revendication 1, comprenant en outre :
- la détermination d'un troisième temps de traversée (152) de ladite station mobile, ledit troisième temps de traversée reflétant le temps nécessaire à ladite station mobile pour traverser une troisième aire de transfert (122) de ladite zone de transfert, ladite troisième aire de transfert comprenant totalement lesdites première et deuxième aires de transfert, ledit réseau sans fil à couverture discontinue produisant un troisième débit moyen (146) pour la troisième aire de transfert ;
- si ledit premier rapport est inférieur à un, la détermination d'un deuxième rapport (162) entre les premier et deuxième produits, dans lequel les paramètres concernant la troisième aire de transfert remplacent dans les formules des premier et deuxième produits les paramètres concernant la deuxième aire de transfert, et dans lequel les paramètres concernant la deuxième aire de transfert remplacent dans les formules des premier et deuxième produits les paramètres concernant la première aire de transfert, dans lequel lesdits paramètres concernent les débits moyens, les temps de traversée et les tailles des zones de transfert ;
- la fourniture desdites données (154) à ladite station mobile dans ladite troisième aire de transfert si ledit deuxième rapport est inférieur à un.

3. Procédé selon la revendication 2, dans lequel si le premier rapport est inférieur à un, les étapes exécutées en relation avec la troisième aire de transfert sont exécutées pour au moins une aire de transfert de plus, dans lequel la ou les aires de transfert de plus comprennent totalement lesdites première, deuxième et troisième aires de transfert, et dans lequel lesdites données sont fournies à ladite station mobile dans ladite au moins une aire de transfert de plus si la ou les aires de transfert de plus sont déterminées sur la base du deuxième produit comme étant les aires de transfert les plus adéquates pour fournir les données à la station mobile.

4. Procédé selon la revendication 2, dans lequel lesdits premier, deuxième et troisième temps de traversée (148, 150, 152) sont déterminés pour ladite station mobile au moyen d'un modèle de mobilité spécifique à la station mobile, dans lequel ledit modèle de mobilité prend en compte la durée des séjours de la station mobile dans les zones de transfert dudit réseau sans fil à couverture discontinue.

5. Réseau sans fil à couverture discontinue (100), comprenant :
- une zone de transfert (104), ladite zone de transfert couvrant au moins une première aire de transfert (118) et une deuxième aire de transfert (120), ladite deuxième aire de transfert comprenant complètement ladite première aire de transfert, ledit réseau à couverture discontinue produisant un premier débit moyen (142) dans ladite première aire de transfert et un deuxième débit moyen (144) dans ladite deuxième aire de transfert ;
- des moyens permettant de déterminer un premier temps de traversée (142) et un deuxième temps de traversée (144) d'une station mobile, ledit premier temps de traversée reflétant le temps nécessaire à ladite station mobile pour traverser ladite première aire de transfert de ladite zone de transfert, ledit deuxième temps de traversée reflétant le temps nécessaire à ladite station mobile pour traverser ladite deuxième aire de transfert ;
- des moyens permettant de déterminer un premier rapport (160) entre un premier produit (156) et un deuxième produit (158), ledit premier produit étant donné par le premier débit moyen multiplié par ledit premier temps de traversée multiplié par la taille de ladite deuxième aire de transfert (138), ledit deuxième produit étant donné par le deuxième débit moyen multiplié par ledit deuxième temps de traversée multiplié par la taille de la première aire de transfert (136) ;
- des moyens permettant de fournir lesdites données (156) à ladite station mobile dans ladite première aire de transfert si ledit premier rapport est supérieur ou égal à un ;
- des moyens permettant de fournir lesdites données à ladite station mobile dans ladite deuxième aire de transfert si ledit premier rapport est inférieur à un.

6. Composant de réseau (102) d'un réseau sans fil à couverture discontinue (100), ledit composant comprenant :
- des moyens permettant de déterminer un premier temps de traversée (148) et un deuxième temps de traversée (150) d'une station mobile (114), ledit premier temps de traversée reflétant le temps nécessaire à ladite station mobile pour traverser une première aire de transfert (118), ledit deuxième temps de traversée reflétant le temps nécessaire à ladite station mobile pour traverser une deuxième aire de transfert (120), lesdites première et deuxième aires de transfert étant associées à une zone de transfert (104), ladite première aire de transfert étant complètement incluse dans ladite deuxième aire de transfert, ledit composant étant associé à la zone de transfert, ledit réseau à couverture discontinue produisant un premier débit moyen (142) pour la fourniture de données (154) à la station mobile dans ladite première aire de transfert et un deuxième débit moyen (144) dans ladite deuxième aire de transfert ;
- des moyens permettant de déterminer un premier rapport (160) entre un premier produit (156) et un deuxième produit (158), ledit premier produit étant donné par le premier débit moyen multiplié par ledit premier temps de traversée multiplié par la taille de ladite deuxième aire de transfert (138), ledit deuxième produit étant donné par le deuxième débit moyen multiplié par ledit deuxième temps de traversée multiplié par la taille de la première aire de transfert (136) ;
- des moyens permettant de fournir les données à ladite station mobile dans ladite première aire de transfert si ledit premier rapport est supérieur ou égal à un ;
- des moyens permettant de fournir lesdites données à ladite station mobile dans ladite deuxième aire de transfert si ledit premier rapport est inférieur à un.

7. Produit programme informatique (134) destiné à sélectionner une aire de transfert (118, 120) d'une zone de transfert (104) d'un réseau sans fil à couverture discontinue (100) pour la fourniture de données (154) à une station mobile (114) passant par ladite zone de transfert, ledit produit programme informatique comprenant des instructions exécutables par ordinateur, lesdites instructions étant adaptées pour exécuter les étapes suivantes :
- détermination d'un premier temps de traversée (148) et d'un deuxième temps de croisement (150) de ladite station mobile, ledit premier temps de traversée reflétant le temps nécessaire à ladite station mobile pour traverser une première aire de transfert (118) de ladite zone de transfert, ledit deuxième temps de traversée reflétant le temps nécessaire à ladite station mobile pour traverser une deuxième aire de transfert (120) de ladite zone de transfert, ladite deuxième aire de transfert comprenant totalement ladite première aire de transfert ;
- détermination d'un premier rapport (160) entre un premier produit (156) et un deuxième produit (158), ledit premier produit étant donné par un premier débit moyen (142) multiplié par ledit premier temps de traversée multiplié par la taille de ladite deuxième aire de transfert (138), ledit deuxième produit étant donné par un deuxième débit moyen (144) multiplié par ledit deuxième temps de traversée multiplié par la taille de la première aire de transfert (136), dans lequel ledit premier débit moyen concerne le débit moyen fourni par le réseau sans fil à couverture discontinue pour la première aire de transfert et dans lequel ledit deuxième débit moyen concerne le débit moyen fourni par le réseau sans fil à couverture discontinue pour la deuxième aire de transfert ;
- la fourniture desdites données à ladite station mobile dans ladite première aire de transfert si ledit premier rapport est supérieur ou égal à un ;
- la fourniture desdites données à ladite station mobile dans ladite deuxième aire de transfert si ledit premier rapport est inférieur à un.
